(19)

Europäisches
Patentamt
European
Patent Office
Office européen
des brevets

(11) **EP 4 671 803 A1**

(12) **EUROPEAN PATENT APPLICATION**

(43) Date of publication:
**31.12.2025  Bulletin 2026/01**

(21) Application number: **24184160.0**

(22) Date of filing: **25.06.2024**

(51) International Patent Classification (IPC):
***G01S 5/02*** *(2010.01)*

(52) Cooperative Patent Classification (CPC):
**G01S 5/0273**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Stichting IMEC Nederland
5656 AE Eindhoven (NL)**

(72) Inventor: **Marshall, Chris
5581 CM Waalre (NL)**

(74) Representative: **Körfer, Thomas
Mitscherlich PartmbB
Patent- und Rechtsanwälte
Karlstraße 7
80333 München (DE)**

(54) **SYSTEM AND METHOD FOR PHASE-BASED POSITIONING**

(57)    According to an aspect of this disclosure, a system (100) for phase-based positioning is provided. The system comprises at least one target device (101) configured to transmit a first signal fragment (102). In addition, the system comprises at least one transceiver device (103) configured to receive the first signal fragment (102) from the target device (101), to measure a phase of the first signal fragment (102), and to transmit a second signal fragment (104) with a phase having a known phase relationship with the measured phase of the first signal fragment (102). Furthermore, the system comprises at least one receiver device (105) configured to receive the first signal fragment (102) from the target device (101), to measure the phase of the first signal fragment (102), to receive the second signal fragment (104) from the transceiver device (103), and to measure the phase of the second signal fragment (104). Moreover, the system comprises at least one processing unit (107) configured to calculate a phase difference between the phase of the first signal fragment (102) and the phase of the second signal fragment (104) measured by the receiver device (105) to estimate position information of the target device (101).

Fig. 1

EP 4 671 803 A1

**Description**

TECHNICAL FIELD

The invention relates to a one-way localization scheme using phase measurements, especially phase difference of arrival measurements, of wireless signals.

BACKGROUND

Generally, two-way localization systems are being created for ranging, that use phase measurements of signals by each of two devices, combined with the knowledge of the phase relationship between the transmission and reception of signals at each device.

On the other hand, one-way localization systems have advantages, such as privacy (the information needed to estimate position is only available at one device), low latency (the information required for position estimation is readily and immediately available to a device using the information, for example, for navigation purposes) and scalability (multiple devices can be supported without linearly increasing the wireless capacity used).

For example, the document EP 4 273 572 A1 discloses a one-way phase measurement system for estimating position information of a target node using a reference device and/or double-differencing techniques to remove the phase offsets of devices. However, the use of an additional reference node or device is cost intensive as well as resource intensive.

SUMMARY

In view of the above, an object of the invention is to provide systems and methods for phase-based positioning in a simplified and cost-effective manner. Another object is to remove the phase offsets of devices in a one-way localization scheme in a simplified and cost-effective manner.

These and other objects are solved by the features of the first and second independent claims for the systems, and by the features of the third and fourth independent claims for the methods. The dependent claims contain further developments.

According to a first aspect of the invention, a system for phase-based positioning is provided. The system comprises at least one target device configured to transmit a first signal fragment. In addition, the system comprises at least one transceiver device configured to receive the first signal fragment from the target device, to measure a phase of the first signal fragment, and to transmit a second signal fragment with a phase having a known phase relationship with the measured phase of the first signal fragment.

Furthermore, the system comprises at least one receiver device configured to receive the first signal fragment from the target device, to measure the phase of the first signal fragment, to receive the second signal fragment from the transceiver device, and to measure the phase of the second signal fragment. Moreover, the system comprises at least one processing unit configured to calculate a phase difference between the phase of the first signal fragment as measured by the receiver device and the phase of the second signal fragment as measured by the receiver device to estimate position information of the target device.

Preferably, the processing unit is configured to estimate the position information of the target device based on the calculated phase difference between the phase of the first signal fragment and the phase of the second signal fragment as measured by the receiver device and the known phase relationship between the phase of the second signal fragment and the measured phase of the first signal fragment.

Therefore, phase difference of arrival measurements are performed to locate the target device using a pair of anchors, i.e., the transceiver device and the receiver device, especially in an uplink configuration. It is advantageous since a precise synchronization of the transceiver device and the receiver device is not required.

Further advantageously, a reference device is not required. Instead, the phase of the signal fragment transmitted by the transceiver device has a known phase relationship to the phase of the signal fragment received by the transceiver device, which is sufficient to remove the phase offsets of devices.

It is to be noted that the position information may relate to the relative position of the target device with respect to the position of the receiver device and/or the position of the transceiver device.

Preferably, the position information of the transceiver device and the position information of the receiver device are known, especially to the processing unit. In other words, the transceiver device and the receiver device may act as anchors or anchor nodes, i.e., devices or nodes with predetermined locations and/or with precise geographical coordinates, for locating the target device.

For example, the first signal fragment transmitted by the target device comprises an arbitrary phase. Additionally or alternatively, the phase of the first signal fragment as measured by the transceiver device is arbitrary. For instance, the phase of the first signal fragment measured by the transceiver device relative to the local oscillator of the transceiver device may be arbitrary, since the phase of the local oscillator of the transceiver device is generally unknown.

Preferably, the transceiver device is configured to transmit the known phase relationship between the phase of the second signal fragment and the measured phase of the first signal fragment to the processing unit. Alternatively, the known phase relationship between the phase of the second signal fragment and the measured phase of the first signal fragment is known a priori to the processing unit.

Advantageously, the transmission of the known phase relationship may cancel out the unknown arbitrary phase of the transceiver device. In other words, the known phase relationship between the phase of the reception of the first signal fragment and the phase of the transmission of the second signal fragment means that the unknown phase offset of the transceiver oscillator/clock can be cancelled.

Moreover, the measurement of the phase difference between the first signal fragment (i.e., the direct signal fragment from the target device to the receiver device) and the second signal fragment (i.e., the indirect signal fragment from the transceiver device to the receiver device) may cancel out the unknown phase offsets of the target device and of the receiver device, since the direct and the indirect signal fragments are derived from the same direct fragment phase.

Preferably, the transceiver device is configured to transmit the second signal fragment at a different time with respect to a transmission time of the first signal fragment transmitted by the target device (e.g., to avoid collision). Additionally or alternatively, the transceiver device is configured to transmit the second signal fragment with a modulation scheme different from a modulation scheme of the first signal fragment transmitted by the target device (e.g., concurrent transmission with different spreading codes).

Preferably, in both cases, the phase relationship between the phase of the second signal fragment and the measured phase of the first signal fragment is known. Advantageously, the direct and the indirect signal fragments are easily distinguishable at the receiver device.

Preferably, the receiver device comprises the processing unit. Advantageously, the processing unit, e.g., by way of a positioning engine, may be conveniently implemented in the receiver device. Alternatively, the processing unit may be a remote processor, e.g., a processing function in the infrastructure, cloud, or other processing entity or service.

Preferably, the transceiver device and the receiver device are access point devices, especially a wireless access point device. Additionally or alternatively, the transceiver device is a mobile device, especially a wireless mobile device. Additionally or alternatively, the target device is a mobile device, especially a wireless mobile device.

According to a second aspect of the invention, a further system for phase-based positioning is provided. The system comprises at least one transmitter device configured to transmit a first signal fragment. In addition, the system comprises at least one transceiver device configured to receive the first signal fragment from the transmitter device, to measure a phase of the first signal fragment, and to transmit a second signal fragment with a phase having a known phase relationship with the measured phase of the first signal fragment.

Furthermore, the system comprises at least one target device configured to receive the first signal fragment from the transmitter device, to measure the phase of the first signal fragment, to receive the second signal fragment from the transceiver device, and to measure the phase of the second signal fragment. Moreover, the system comprises at least one processing unit configured to calculate a phase difference between the phase of the first signal fragment as measured by the target device and the phase of the second signal fragment as measured by the target device to estimate position information of the target device.

Preferably, the processing unit is configured to estimate the position information of the target device based on the calculated phase difference between the phase of the first signal fragment and the phase of the second signal fragment as measured by the target device and the known phase relationship between the phase of the second signal fragment and the measured phase of the first signal fragment.

Therefore, phase difference of arrival measurements are performed to locate the target device using a pair of anchors, i.e., the transmitter device and the transceiver device, especially in a downlink configuration. It is advantageous since a precise synchronization of the transceiver device and the receiver device is not required.

Further advantageously, a reference device is not required. Instead, the phase of the signal fragment transmitted by the transceiver device has a known phase relationship to the phase of the signal fragment received by the transceiver device, which is sufficient to remove the phase offsets of devices.

It is to be noted that the position information may relate to the relative position of the target device with respect to the position of the transmitter device and/or the position of the transceiver device.

Preferably, the position information of the transmitter device and the position information of the transceiver device are known, especially to the processing unit. In other words, the transmitter device and the transceiver device may act as anchors or anchor nodes, i.e., devices or nodes with predetermined location and/or with precise geographical coordinates, for locating the target device.

For example, the first signal fragment transmitted by the transmitter device comprises an arbitrary phase. Additionally or alternatively, the phase of the first signal fragment as measured by the transceiver device is arbitrary. For instance, the phase of the first signal fragment measured by the transceiver device relative to the local oscillator of the transceiver device may be arbitrary, since the phase of the local oscillator of the transceiver device is generally unknown.

Preferably, the transceiver device is configured to transmit the known phase relationship between the phase of the second signal fragment and the measured phase of the first signal fragment to the processing unit. Alternatively, the known phase relationship between the phase of the second signal fragment and the measured phase of the first signal fragment is known a priori to the processing unit.

Advantageously, the transmission of the known phase relationship may cancel out the unknown arbitrary phase of the transceiver device. In other words, the known phase relationship between the phase of the reception of the first signal fragment and the phase of the transmission of the second signal fragment means that the unknown phase offset of the transceiver oscillator/clock can be cancelled.

Moreover, the measurement of the phase difference between the first signal fragment (i.e., the direct signal fragment from the transmitter device to the target device) and the second signal fragment (i.e., the indirect signal fragment from the transceiver device to the target device) may cancel out the unknown phase offsets of the transmitter device and of the target device, since the direct and the indirect signal fragments are derived from the same direct fragment phase.

Preferably, the transceiver device is configured to transmit the second signal fragment at a different time with respect to a transmission time of the first signal fragment transmitted by the transmitter device (e.g., to avoid collision). Additionally or alternatively, the transceiver device is configured to transmit the second signal fragment with a modulation scheme different from a modulation scheme of the first signal fragment transmitted by the transmitter device (e.g., concurrent transmission with different spreading codes).

Preferably, in both cases, the phase relationship between the phase of the second signal fragment and the measured phase of the first signal fragment is known. Advantageously, the direct and the indirect signal fragments are easily distinguishable at the target device.

Preferably, the target device comprises the processing unit. Advantageously, the processing unit, e.g., by way of a positioning engine, may be conveniently implemented in the target device. Alternatively, the processing unit may be a remote processor, e.g., a processing function in the infrastructure, cloud, or other processing entity or service.

Preferably, the transmitter device and the transceiver device are access point devices, especially a wireless access point device. Additionally or alternatively, the transceiver device is a mobile device, especially a wireless mobile device. Additionally or alternatively, the target device is a mobile device, especially a wireless mobile device.

According to a third aspect of the invention, a method for phase-based positioning is provided. The method comprises a step of transmitting, by at least one target device, a first signal fragment. The method comprises a further step of receiving, by at least one transceiver device, the first signal fragment from the target device. The method comprises a further step of measuring, by the transceiver device, a phase of the first signal fragment. The method comprises a further step of transmitting, by the transceiver device, a second signal fragment with a phase having a known phase relationship with the measured phase of the first signal fragment.

The method comprises a further step of receiving, by at least one receiver device, the first signal fragment from the target device. The method comprises a further step of measuring, by the receiver device, the phase of the first signal fragment. The method comprises a further step of receiving, by the receiver device, the second signal fragment from the transceiver device. The method comprises a further step of measuring, by the receiver device, the phase of the second signal fragment.

The method comprises a further step of calculating, by at least one processing unit, a phase difference between the phase of the first signal fragment and the phase of the second signal fragment as measured by the receiver device.

The method comprises a further step of estimating, by the processing unit, position information of the target device based on the calculated phase difference.

Preferably, the method comprises a step of estimating the position information of the target device based on the calculated phase difference and the known phase relationship between the phase of the second signal fragment and the measured phase of the first signal fragment.

According to a fourth aspect of the invention, a further method for phase-based positioning is provided. The method comprises a step of transmitting, by at least one transmitter device, a first signal fragment. The method comprises a further step of receiving, by at least one transceiver device, the first signal fragment from the transmitter device. The method comprises a further step of measuring, by the transceiver device, a phase of the first signal fragment. The method comprises a further step of transmitting, by the transceiver device, a second signal fragment with a phase having a known phase relationship with the measured phase of the first signal fragment.

The method comprises a further step of receiving, by at least one target device, the first signal fragment from the transmitter device. The method comprises a further step of measuring, by the target device, the phase of the first signal fragment. The method comprises a further step of receiving, by the target device, the second signal fragment from the transceiver device. The method comprises a further step of measuring, by the target device, the phase of the second signal fragment.

The method comprises a further step of calculating, by at least one processing unit, a phase difference between the phase of the first signal fragment and the phase of the second signal fragment as measured by the target device. The method comprises a further step of estimating, by the processing unit, position information of the target device based on the calculated phase difference.

Preferably, the method comprises a step of estimating the position information of the target device based on the calculated phase difference and the known phase relationship between the phase of the second signal fragment and the measured phase of the first signal fragment.

It is to be noted that the terms "first," "second," etc. are used as labels for nouns that they precede, and do not imply any type of ordering or sequence of events, unless specifically stated.

It is further to be noted that a signal fragment may have a limited and/or a defined time-duration. For example, a signal fragment may be a discontinuous part of a wireless transmission sequence, e.g., TDMA wireless signals.

It is further to be noted that position or location information may refer to a location in two-dimensional or three-dimensional space. In this regard, the position information can be a vertical comparative distance (for instance, which floor, which shelf) or a horizontal comparative distance (for example, proximity to boundary) and/or direction (for instance, collision path).

It is further to be noted that the method according to the third aspect corresponds to the system according to the first aspect and its implementation forms. Furthermore, the method according to the fourth aspect corresponds to the system according to the second aspect and its implementation forms.

It is further to be noted that the elements and/or components of the system according to the second aspect may have corresponding implementation forms of the analogous elements and/or components according to the system of the first aspect.

BRIEF DESCRIPTION OF THE DRAWINGS

Exemplary embodiments of the invention are now further explained with respect to the drawings by way of example only, and not for limitation. In the drawings:

Fig. 1    shows an exemplary embodiment of the system according to the first aspect of the invention;

Fig. 2A    shows an exemplary phase differencing scheme according to the first aspect of the invention;

Fig. 2B    shows an exemplary message sequence chart according to the scheme of Fig. 2A;

Fig. 3    shows an exemplary embodiment of the system according to the second aspect of the invention;

Fig. 4    shows an exemplary phase differencing scheme according to the second aspect of the invention;

Fig. 5    shows an exemplary embodiment of the method according to the third aspect of the invention; and

Fig. 6    shows an exemplary embodiment of the method according to the fourth aspect of the invention.

DETAILED DESCRIPTION OF EMBODIMENTS

Reference will now be made in detail to the embodiments of the present invention, examples of which are illustrated in the accompanying drawings. However, the following embodiments of the present invention may be variously modified and the range of the present invention is not limited by the following embodiments.

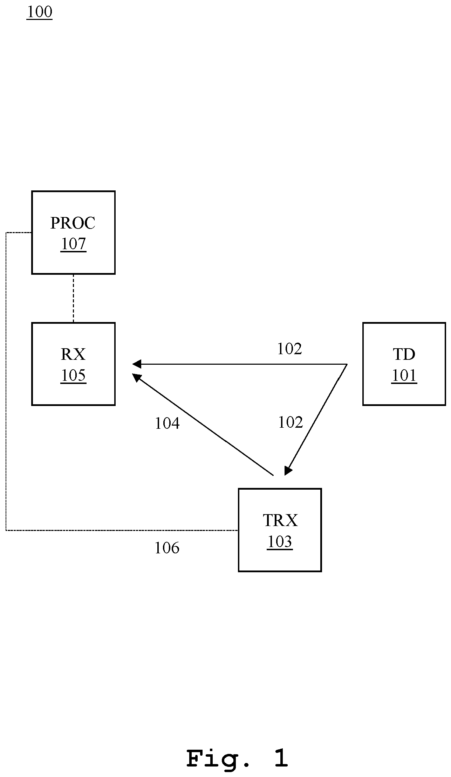

In Fig. 1, an exemplary embodiment of the system 100 according to the first aspect of the invention is illustrated. The system 100 may comprise a target device or a user device 101, which may transmit a first signal fragment 102, for instance, with an arbitrary phase. The system 100 may further comprise a transceiver device or a transceiver 103, which may receive the first signal fragment 102 from the target device 101.

In this regard, the transceiver device 103 may measure a phase of the first signal fragment 102, where the measured phase of the first signal fragment 102 received from the target device 101 may be arbitrary, especially relative to the local oscillator of the transceiver device 103, since the phase of the local oscillator of the transceiver device 103 is generally unknown.

The transceiver device 103 may transmit a second signal fragment 104 with a phase having a known phase relationship with the measured phase of the first signal fragment 102. In other words, the transceiver device 103 may transmit the second signal fragment 104 with a known phase relationship between the phase of the measured first signal fragment 102 received from the target device 101 and the phase of the transmitted second signal fragment 104. This may effectively cancel out the unknown arbitrary phase of the transceiver device 104.

For example, the transceiver device 103 may take into account any additional phase shift factors, such as phase shifts during the signal passing through the amplifier(s), mixer(s), filter(s), signal converter(s), and so on, of the transceiver device 103, in the above-mentioned phase relationship.

The system 100 may further comprise a receiver device or a receiver 105, which may receive the first signal fragment 102 from the target device 101 and may measure the phase of the first signal fragment 102. In addition, the receiver device 105 may further receive the second signal fragment 104 from the transceiver device 103 and may measure the phase of the second signal fragment 104.

The system 100 may further comprise a processing unit or a processor 107. The processing unit 107 may comprise one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or the like. The processing unit 107 may be implemented in the receiver device 105.

The processing unit 107 may calculate a phase difference between the phase of the first signal fragment 102 and the phase of the second signal fragment 104 as measured by the receiver device 105 to estimate location information of the target device 101. Since the first signal fragment 102 and the second signal fragment 104 are derived from the same phase of the first signal fragment 102, this may cancel out the unknown phase offsets of the target device 101 and of the receiver device 105.

For example, the difference in phase between the phase of the first signal fragment 102 and the phase of the second signal fragment 104 as measured by the receiver device 105 may provide location information of the target device 101 as the difference in propagation distance plus the phase change introduced within the transceiver device 103 between the reception and transmission. Since the phase between transmission and reception is known, for instance, the local oscillator phase of the transceiver device 103 has no effect, and thus the value of said phase between transmission and reception can effectively determine the locus for the location of the target.

In this regard, the processing unit 107 may have prior knowledge regarding the location information of the transceiver device 103 and the location information of the receiver device 105. As such, the distance and the propagation time between the transceiver device 103 and the receiver device 105 may be known to the processing unit 107.

Hence, the difference in phase between the phase of the first signal fragment 102 and the phase of the second signal fragment 104 as measured by the receiver device 105 may provide location information of the target device 101 as, for example, a hyperbola or a family of hyperbolae (e.g., due to the phase measurement ambiguity of $2\pi$) for the locus of positions for the target device 101.

For instance, the processing unit 107 may have prior knowledge regarding the known phase relationship or the relative phase between the phase of the second signal fragment 104 and the measured phase of the first signal fragment 102, i.e., the transceiver phase relationship.

For example, the processing unit 107 may calibrate the above-mentioned phase relationship information by means of previous measurements. For instance, with measurements when the target device 101 is in a known location, the phase relationship information of the transceiver device 103 can be estimated (such that the estimated location of the target device 101 corresponds to the actual known location) and said estimated value can be used by the processing unit 107 for finding the location in further unknown locations of the target device 101.

For example, the relative phase or the transceiver phase relationship may be known a priori by design, e.g., that the local oscillator in the transceiver device 103 may be aligned with the first signal fragment 102 from the target device 101, and may be used directly to generate the second signal fragment 104 transmitted by the transceiver device 103.

Alternatively, the relative phase or the transceiver phase relationship may be known a posteriori by measurement, e.g., the transceiver device 103 may measure the phase of the first signal fragment 102 received from the target device 101, may further measure the phase of the second signal fragment 104, and may report, e.g., via a communication link 106, the phase difference to the processing unit 107.

For example, the information on the value of the relative phase or the transceiver phase relationship may be provided as assistance information, e.g., as configuration information. Additionally or alternatively, the information on the value of the relative phase or the transceiver phase relationship may be provided as data contained in the second signal fragment 104 transmitted by the transceiver device 103.

For example, the relative phase between the second signal fragment 104 transmitted by the transceiver device 103 and the first signal fragment 102 received by the transceiver device 103 may be in the range interval $-\pi$ to $+\pi$ or equivalently from zero to $2\pi$, i.e., the relative phase or the transceiver phase relationship may be positive or negative.

For example, regarding the relative phase between the second signal fragment 104 transmitted by the transceiver device 103 and the first signal fragment 102 received by the transceiver device 103, a phase difference of zero can be very useful such that the second signal fragment 104 is in perfect phase with the measured phase of the first signal fragment 102, and therefore the processing unit 107 can already assume the relative phase or the transceiver phase relationship without the prior or posterior knowledge. This can be achieved, for example, by transmitting the second signal fragment 104 by the transceiver device 103 with the same phase or with multiples of $2\pi$ as that of the first signal fragment 102 received by the transceiver device 103.

For example, the transceiver device 103 may transmit the second signal fragment 104 at a different time with respect to a transmission time of the first signal fragment 102 transmitted by the target device 101, e.g., to avoid collision.

Alternatively, the transceiver device 103 may transmit the second signal fragment 104 with a modulation scheme different from a modulation scheme, e.g., a different spreading code, of the first signal fragment 102 transmitted by the target device 101. In this regard, the transceiver device 103 may transmit the second signal fragment 104 concurrently with the transmission of the first signal fragment 102 transmitted by the target device 101.

For example, the second signal fragment 104 transmitted by the transceiver device 103 may be transmitted close in time to the first signal fragment 102 transmitted by the target device 101. This may be advantageous since in practice there may be a small frequency offset between the local oscillator in the transceiver device 103 and the local oscillator in the receiver device 105, and this small frequency offset may give rise to a difference in phase changes as perceived by these two devices.

As such, this may have an effect on the receiver device 105 depending on the elapsed time between the reception of the first signal fragment 102 from the target device 101 and the second signal fragment 104 from the transceiver device 103. For example, the transceiver device 103 may transmit the second signal fragment 104 in advance or following the reception of the first signal fragment 102 from the target device 101, and may report the resulting phase relationship to the processing unit 107.

In this regard, for example, the transceiver device 103 may recently have transmitted a signal or a signal fragment, and then receives the first signal fragment 102, and may measure the phase of arrival of the currently received signal, i.e., the first signal fragment 102, compare it to the phase of the signal or the signal fragment it recently transmitted, and communicate the difference to the processing unit 107.

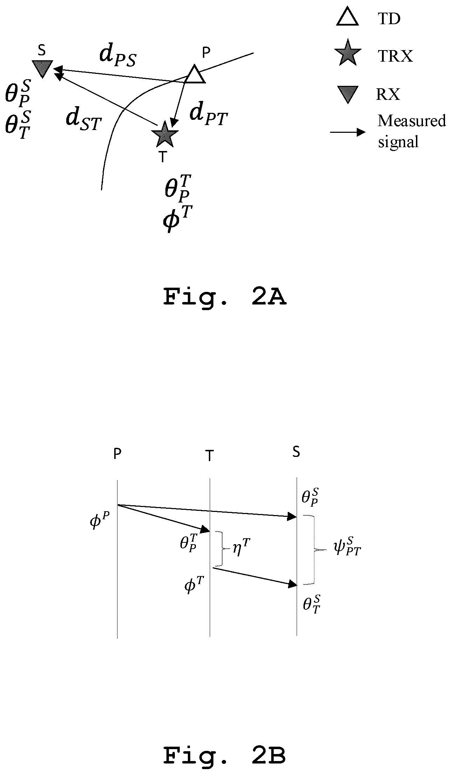

Along Fig. 2A and Fig. 2B, an exemplary one-way positioning scheme is illustrated, especially for the uplink configuration of the target device 101. In particular, Fig. 2A shows the measurement of the phase difference of arrival, and Fig. 2B shows the corresponding message sequence chart.

It is to be noted that the symbol P denotes the target device 101, the symbol T denotes the transceiver device 103, and the symbol S denoted the receiver device 105. The directional arrows denote the received and measured signals.

For instance, $d_{PT}$ denotes the propagation distance between the target device P and the transceiver device T, $d_{ST}$ denotes the propagation distance between the receiver device S and the transceiver device T, and $d_{PS}$ denotes the propagation distance between the target device P and the receiver device S.

It is to be noted that, in the following mathematical description, the phase of the signal fragment transmitted by X is indicated by $\phi^X$ and the phase of the signal from Y as received and measured by X is indicated by $\theta_Y^X$. It is further to be noted that, all phases are with respect to the local oscillator of the device, are in the range $-\pi$ to $+\pi$, and subject to an arbitrary wrap-around ambiguity of $2\pi$, giving rise to an unknown ambiguity indicated by the integer **k,** which may take a different value in each line of the equations.

It is further to be noted that the target device P, the transceiver device T, and the receiver device S have local oscillators at the same frequency, but with arbitrary and unknown phases $\alpha^P$, $\alpha^T$ and $\alpha^S$, respectively.

The signal fragment from the target device P is transmitted with phase $\phi^T$ relative to its local oscillator and measured directly by the receiver device S with observed phase corresponding to the propagation distance, and the difference between the phases of the local oscillators of the target device P and the receiver device S.

$$\theta_P^S = 2\pi \frac{d_{PS}}{\lambda} + \phi^P + \alpha^P - \alpha^S + \boldsymbol{k}2\pi \qquad (1)$$

Similarly, this signal fragment is received and measured by the transceiver device T with observed phase

$$\theta_P^T = 2\pi \frac{d_{PT}}{\lambda} + \phi^P + \alpha^P - \alpha^T + \boldsymbol{k}2\pi \qquad (2)$$

The transceiver device T then transmits a signal fragment with known phase relationship $\eta^T$ of the transmitted signal fragment compared to the measured phase of the received signal fragment

$$\phi^T = \theta_P^T + \eta^T + \boldsymbol{k}2\pi \qquad (3)$$

so that the phase of the fragment transmitted by the transceiver device T as measured by its local oscillator is

$$\phi^T = 2\pi \frac{d_{PT}}{\lambda} + \eta^T + \phi^P + \alpha^P - \alpha^T + \boldsymbol{k}2\pi \qquad (4)$$

**EP 4 671 803 A1**

This signal is then received and measured by the receiver device S with phase relative to its local oscillator, again corresponding to the propagation distance and the difference between the phases of the local oscillators:

$$\theta_T^S = 2\pi \frac{d_{ST}}{\lambda} + \phi^T + \alpha^T - \alpha^S + k2\pi \tag{5}$$

So, substituting for the phase of the signal fragment transmitted by the transceiver device T

$$\theta_T^S = 2\pi \frac{d_{ST} + d_{PT}}{\lambda} + \eta^T + \phi^P + \alpha^P - \alpha^S + k2\pi \tag{6}$$

From which it can be seen that the unknown phase offset of the transceiver device $\alpha^T$ has dropped out, since the relative phase between the reception and transmission $\eta^T$, i.e., the transceiver phase relationship is all that is relevant.

The receiver device S, especially the processing unit 107, then compares the phase of the direct signal fragment received from the target device P $\theta_P^S$ and the indirect signal fragment received from the transceiver device T $\theta_T^S$, $(\theta_P^S - \theta_T^S)$, which is given by

$$\theta_P^S - \theta_T^S = 2\pi \frac{d_{PS} - d_{PT} - d_{ST}}{\lambda} - \eta^T + k2\pi \tag{7}$$

As it can be seen, the unknown phase offset terms $\alpha^P$ and $\alpha^S$ have been cancelled out.

Writing the phase difference between the signal fragments from the target device P and the transceiver device T as measured by the receiver device S as:

$$\psi_{PT}^S = \theta_P^S - \theta_T^S \tag{8}$$

and rearranging this expression then gives the information on the difference in distance between the target device P and the two anchors, namely the transceiver device T and the receiver device S, which since the locations of the anchors (and hence also the distance between them, $d_{ST}$), gives the locus of possible locations for the target device P on the hyperbola with foci T and S, according to

$$(d_{PS} - d_{PT}) = \frac{\lambda}{2\pi} \left[ \psi_{PT}^S + \eta^T \right] + d_{ST} + k\lambda \tag{9}$$

The location information is thus provided by the phase difference measurement of the fragments at the receiver device S, combined with the known phase between transmission of the fragment and the reception of the fragment by the transceiver device T. This is independent of the phase offsets of the individual devices. The particular hyperbolic locus is ambiguous, according to the wavelength A of the phase difference.

For example, the measurements of the uplink configuration according to the system 100 can be performed at multiple frequencies.

When measurements are made at multiple frequencies, the difference in phase as measured by the receiver can be defined at frequency fi with wavelength $\lambda_i$ as $\psi_i = \psi_{PT}^S = \theta_S^P - \theta_T^P$, dropping the sur- and suffixes of $\psi$.

As such, the difference between phase measurements at two frequencies can be formed (assuming for simplicity that $\eta^T$ is constant by design), then it can be shown that the phase difference observed at the difference frequency corresponds to the spatial variation at the wavelength corresponding to that difference frequency, so that with

$$\psi_{ij} = \psi_i - \psi_j \tag{10}$$

$$(d_{PS} - d_{PT}) = \frac{\lambda_{ij}}{2\pi} \left[ \psi_{ij} + \eta^T \right] + d_{ST} + k\lambda_{ij} \tag{11}$$

where

$$\lambda_{ij} = \frac{c}{f_i - f_j} \qquad\qquad (12)$$

The location information using the difference between the phase at a pair of frequencies then corresponds to the same hyperbolic variation with foci at the anchors S and T, but now with the precision and ambiguity of which hyperbola corresponding to the wavelength for the difference between the frequencies. As is well known, close frequencies give a long wavelength and large ambiguity distance, while widely spaced frequencies give a shorter wavelength, better precision, but short ambiguity distance.

It is to be noted that, in addition to the above-described phase difference of arrival measurement, the system 100 may additionally perform one or more time difference of arrival measurements, e.g., between the target device P and the receiver device S, and may combine the time difference of arrival measurements with the above-described phase difference of arrival measurement in order to resolve any ambiguity in the phase difference of arrival measurements.

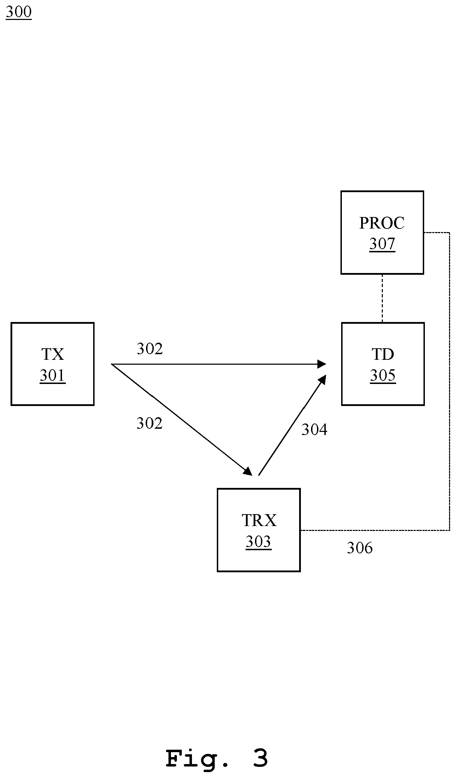

In Fig. 3, an exemplary embodiment of the system 300 according to the second aspect of the invention is illustrated. The system 300 may comprise a transmitter device or a transmitter 301, which may transmit a first signal fragment 302, for instance, with an arbitrary phase. The system 300 may further comprise a transceiver device or a transceiver 303, which may receive the first signal fragment 302 from the transmitter device 301.

In this regard, the transceiver device 303 may measure a phase of the first signal fragment 302, where the phase of the measured first signal fragment 302 received from the transmitter device 301 may be arbitrary, especially relative to the local oscillator of the transceiver device 303, since the phase of the local oscillator of the transceiver device 303 is generally unknown.

The transceiver device 303 may transmit a second signal fragment 304 with a phase having a known phase relationship with the measured phase of the first signal fragment 302. In other words, the transceiver device 303 may transmit the second signal fragment 304 with a known phase relationship between the phase of the measured first signal fragment 302 received from the transmitter device 301 and the phase of the transmitted second signal fragment 304. This may effectively cancel out the unknown arbitrary phase of the transceiver device 304.

Preferably, the transceiver device 303 may take into account any additional phase shift factors, such as phase shifts during the signal passing through the amplifier(s), mixer(s), filter(s), signal converter(s), and so on, of the transceiver device 303, in the above-mentioned phase relationship.

The system 300 may further comprise a target device or a user device 305, which may receive the first signal fragment 302 from the transmitter device 301 and may measure the phase of the first signal fragment 302. In addition, the target device 305 may further receive the second signal fragment 304 from the transceiver device 303 and may measure the phase of the second signal fragment 304.

The system 300 may further comprise a processing unit or a processor 307. The processing unit 307 may comprise one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or the like. The processing unit 307 may be implemented in the target device 305.

The processing unit 307 may calculate a phase difference between the phase of the first signal fragment 302 and the phase of the second signal fragment 304 as measured by the target device 305 to estimate location information of the target device 305. Since the first signal fragment 302 and the second signal fragment 304 are derived from the same phase of the first signal fragment 302, this may cancel out the unknown phase offsets of the transmitter device 301 and of the target device 305.

For example, the difference in phase between the phase of the first signal fragment 302 and the phase of the second signal fragment 304 as measured by the target device 305 may provide location information of the target device 305 as the difference in propagation distance plus the phase change introduced within the transceiver device 303 between the reception and transmission. Since the phase introduced within the transceiver device between transmission and reception is known, for instance, the local oscillator phase of the transceiver device 303 has no effect, and thus the value of said phase between transmission and reception can effectively determine the locus for the location of the target.

In this regard, the processing unit 307 may have prior knowledge regarding the location information of the transceiver device 303 and the location information of the transmitter device 301. As such, the distance and the propagation time between the transmitter device 301 and the transceiver device 303 may be known to the processing unit 307.

Hence, the difference in phase between the phase of the first signal fragment 302 and the phase of the second signal fragment 304 as measured by the target device 305 may provide location information of the target device 305 as, for example, a hyperbola or a family of hyperbolae (e.g., due to the phase measurement ambiguity of $2\pi$) for the locus of positions for the target device 305.

For instance, the processing unit 307 may have prior knowledge regarding the known phase relationship or the relative phase between the phase of the second signal fragment 304 and the measured phase of the first signal fragment 302, i.e., regarding the transceiver phase relationship.

For example, the processing unit 307 may calibrate the above-mentioned phase relationship information, i.e., the transceiver phase relationship by means of previous measurements. For instance, with measurements when the target device 305 is in a known location, the phase relationship information of the transceiver device 303 can be estimated (such that the estimated location of the target device 305 corresponds to the actual known location) and said estimated value can be used by the processing unit 307 for finding the location in further unknown locations of the target device 305.

For example, the relative phase or the transceiver phase relationship may be known a priori by design, e.g., that the local oscillator in the transceiver device 303 may be aligned with the first signal fragment 302 from the transmitter device 301, and may be used directly to generate the second signal fragment 304 transmitted by the transceiver device 303.

Alternatively, the relative phase or the transceiver phase relationship may be known a posteriori by measurement, e.g., the transceiver device 303 may measure the phase of the first signal fragment 302 received from the transmitter device 301, may further measure the phase of the second signal fragment 304, and may report, e.g., via a communication link 306, the phase difference to the processing unit 307.

For example, the information on the value of the relative phase or the transceiver phase relationship may be provided as assistance information, e.g., as configuration information. Additionally or alternatively, the information on the value of the relative phase or the transceiver phase relationship may be provided as data contained in the second signal fragment 304 transmitted by the transceiver device 303.

For example, the relative phase between the second signal fragment 304 transmitted by the transceiver device 303 and the first signal fragment 302 received by the transceiver device 303 may be in the range interval $-\pi$ to $+\pi$ or equivalently from zero to $2\pi$, i.e., the relative phase or the transceiver phase relationship may be positive or negative.

For example, regarding the relative phase between the second signal fragment 304 transmitted by the transceiver device 303 and the first signal fragment 302 received by the transceiver device 303, a phase difference of zero can be very useful such that the second signal fragment 304 is in perfect phase with the measured phase of the first signal fragment 302, and therefore the processing unit 307 can already assume the relative phase or the transceiver phase relationship without the prior or posterior knowledge. This can be achieved, for example, by producing the second signal fragment 304 by the transceiver device 303 with the same phase or with multiples of $2\pi$ as that of the first signal fragment 302 received by the transceiver device 303.

For example, the transceiver device 303 may transmit the second signal fragment 304 at a different time with respect to a transmission time of the first signal fragment 302 transmitted by the transmitter device 301, e.g., to avoid collision.

Alternatively, the transceiver device 303 may transmit the second signal fragment 304 with a modulation scheme different from a modulation scheme, e.g., a different spreading code, of the first signal fragment 302 transmitted by the transmitter device 301. In this regard, the transceiver device 303 may transmit the second signal fragment 304 concurrently with the transmission of the first signal fragment 302 transmitted by the transmitter device 301.

For example, the second signal fragment 304 transmitted by the transceiver device 303 may be transmitted close in time to the first signal fragment 302 transmitted by the transmitter device 301. This may be advantageous since in practice there may be a small frequency offset between the local oscillator in the transceiver device 303 and the local oscillator in the target device 305, and this small frequency offset may give rise to a difference in phase changes as perceived by these two devices.

As such, this may have an effect on the target device 305 depending on the elapsed time between the reception of the first signal fragment 302 from the transmitter device 301 and the second signal fragment 304 from the transceiver device 303. For example, the transceiver device 303 may transmit the second signal fragment 304 in advance or following the reception of the first signal fragment 302 from the transmitter device 301, and may report the resulting phase relationship to the processing unit 307.

In this regard, for example, the transceiver device 303 may recently have transmitted a signal or a signal fragment, and then receives the first signal fragment 302, and may measure the phase of arrival of the currently received signal, i.e., the first signal fragment 302, compare it to the phase of the signal or the signal fragment it recently transmitted, and communicate the difference, i.e., the transceiver phase relationship to the processing unit 307.

It is to be noted that the target device 305, the transceiver device 303, the transmitter device 301, and the processing unit 307 of the system 300 may correspond to the target device 101, the transceiver device 103, the receiver device 105 (e.g., as a further transceiver device), and the processing unit 107 of the system 100, respectively. Therefore, it can be understood that the system 100 corresponds to an uplink configuration for the target device 101 and the system 300 corresponds to a downlink configuration for the target device 305.

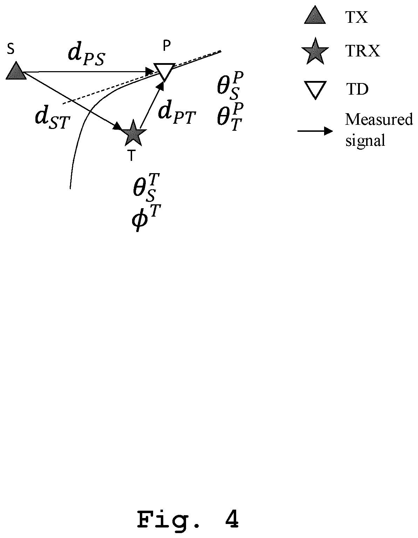

In Fig. 4, an exemplary one-way positioning scheme is illustrated, especially for the downlink configuration of the target device 305.

It is to be noted that, analogous to the positioning scheme of Fig. 2A, the symbol P denotes the target device 305, the symbol T denotes the transceiver device 303, and the symbol S denoted the transmitter device 301. The directional arrows denote the received and measured signals. For instance, $d_{PT}$ denotes the propagation distance between the target device P and the transceiver device T, $d_{ST}$ denotes the propagation distance between the transmitter device S and the transceiver device T, and $d_{PS}$ denotes the propagation distance between the target device P and the transmitter device S.

It is to be noted that, analogous to the positioning scheme of Fig. 2A, the phase of the signal fragment transmitted by X is indicated by $\phi^X$ and the phase of the signal from Y as received and measured by X is indicated by $\theta^X_Y$. It is further to be noted that, analogous to the positioning scheme of Fig. 2A, all phases are with respect to the local oscillator of the device, are in the range $-\pi$ to $+\pi$, and subject to an arbitrary wrap-around ambiguity of $2\pi$, giving rise to an unknown ambiguity indicated by the integer $k$.

It is further to be noted that, analogous to the positioning scheme of Fig. 2A, the target device P, the transceiver device T, and the transmitter device S have local oscillators at the same frequency, but with arbitrary and unknown phases $\alpha^P$, $\alpha^T$ and $\alpha^S$, respectively.

Analogously, the equation (3) can be derived for the downlink configuration of the target device P as:

$$(\phi^T - \theta_S^T) = \eta^T + 2\pi k \tag{13}$$

In the downlink configuration the measured phase difference is that as measured by the receiver device P between the first signal fragment from the transmitter device S and the second signal fragment from the transceiver device T

$$\psi_{ST}^P = \theta_S^P - \theta_T^P \tag{14}$$

Analogously then, the equation (9) can be derived for the downlink configuration of the target device P as:

$$(d_{PS} - d_{PT}) = \frac{\lambda}{2\pi}[\psi_{ST}^P + \eta^T] + d_{ST} \tag{15}$$

In a manner analogous to the positioning scheme of Fig. 2A, it can be seen that the unknown phase offset terms $\alpha^T$, $\alpha^P$ and $\alpha^S$ have dropped out, and the relative phase between the reception and transmission $\eta^T$, i.e., the transceiver phase relationship is all that is relevant.

It is to be noted that, analogous to the uplink configuration according to the system 100, the measurements of the downlink configuration according to the system 300 can be performed at multiple frequencies.

It is further to be noted that, analogous to the uplink configuration according to the system 100, the system 300 may additionally perform one or more time difference of arrival measurements, e.g., between the target device P and the transmitter device S, and may combine the time difference of arrival measurements with the above-described phase difference of arrival measurement in order to resolve any ambiguity in the phase difference of arrival measurements.

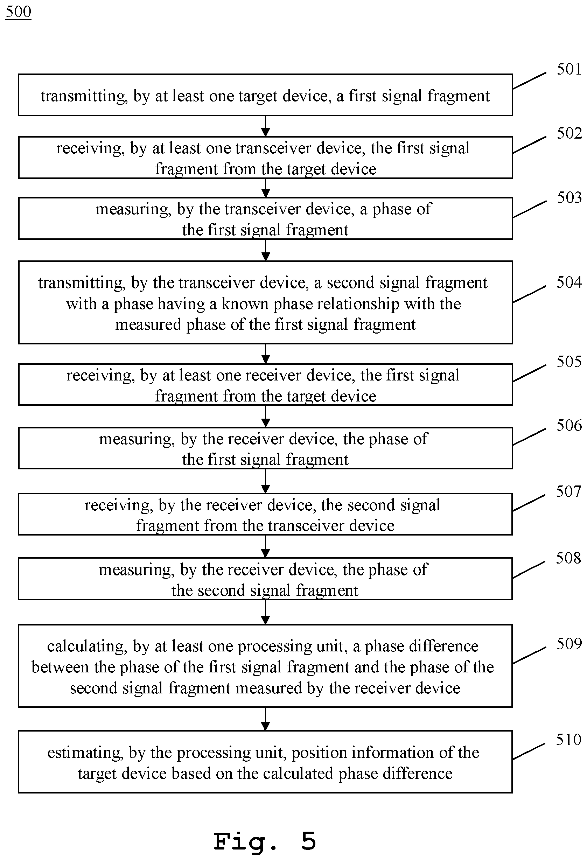

In Fig. 5, an exemplary embodiment of the method 500 according to the third aspect of the invention is illustrated. In a first step 501, a first signal fragment is transmitted by at least one target device. In a second step 502, the first signal fragment from the target device is received by at least one transceiver device. In a third step 503, a phase of the first signal fragment is measured by the transceiver device. In a fourth step 504, a second signal fragment with a phase having a known phase relationship with the measured phase of the first signal fragment is transmitted by the transceiver device.

In a fifth step 505, the first signal fragment from the target device is received by at least one receiver device.

In a sixth step 506, the phase of the first signal fragment is measured by the receiver device. In a seventh step 507, the second signal fragment from the transceiver device is received by the receiver device. In an eighth step 508, the phase of the second signal fragment is measured by the receiver device.

In a ninth step 509, a phase difference between the phase of the first signal fragment and the phase of the second signal fragment as measured by the receiver device is calculated by at least one processing unit. In a tenth step 510, position information of the target device are estimated by the processing unit based on the calculated phase difference.

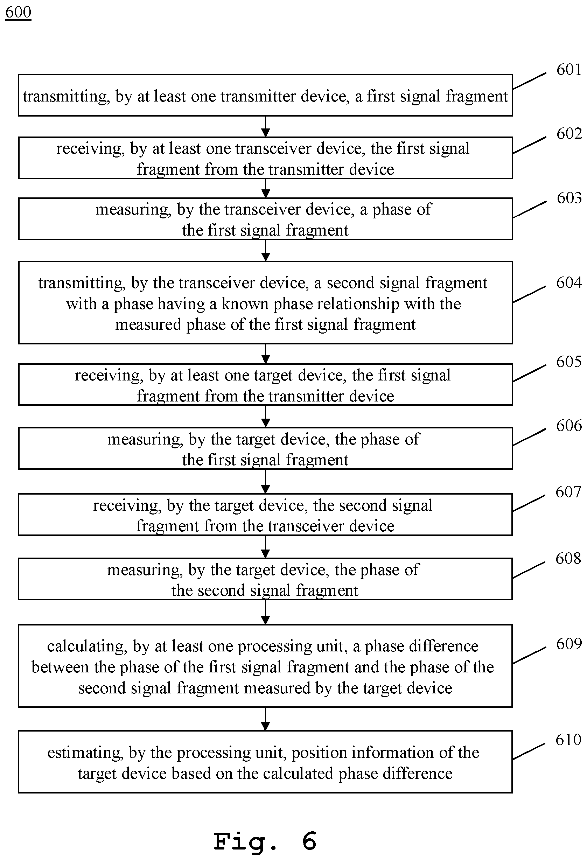

In Fig. 6, an exemplary embodiment of the method 600 according to the fourth aspect of the invention is illustrated. In a first step 601, a first signal fragment is transmitted by at least one transmitter device. In a second step 602, the first signal fragment from the transmitter device is received by at least one transceiver device. In a third step 603, a phase of the first signal fragment is measured by the transceiver device. In a fourth step 604, a second signal fragment with a phase having a known phase relationship with the measured phase of the first signal fragment is transmitted by the transceiver device.

In a fifth step 605, the first signal fragment from the transmitter device is received by at least one target device. In a sixth step 606, the phase of the first signal fragment is measured by the target device. In a seventh step 607, the second signal fragment from the transceiver device is received by the target device. In an eighth step 608, the phase of the second signal fragment is measured by the target device.

In a ninth step 609, a phase difference between the phase of the first signal fragment and the phase of the second signal fragment as measured by the target device is calculated by at least one processing unit. In a tenth step 610, position information of the target device are estimated by the processing unit based on the calculated phase difference.

Therefore, the invention involves a one-way localization system, with associated benefits, for the localization of transmit-only tags by a system (e.g., for asset management in a warehouse), and for the private and low-latency measurement of broadcast wireless signals for devices to position themselves by receive-only measurements (e.g., in an autonomous guided vehicle).

Furthermore, the invention addresses the wish for high precision localization using phase measurements, particularly for the precise relative position between devices (e.g., for collision-avoidance, or for tool-workpiece alignment).

For example, since one of the two (close in time) devices can be a transceiver and the other a target, this invention can be used to precisely locate the target relative to the transceiver. The estimate is not much affected by errors in the knowledge of the absolute location of the (close) transceiver or of the (somewhat distant) anchor, since it is the relative position of the target with respect to the (close) transceiver which is estimated.

Moreover, the invention addresses the cost of wireless positioning, particularly for large-scale IoT applications, such that devices with only loose synchronization requirements can be used (i.e., sufficient for general network management, but not for actual phase synchronization between devices), thereby allowing low cost oscillator components, as well as avoiding expensive installation, cabling and maintenance for synchronization. In addition, the invention facilitates an indirect phase differencing scheme that circumvents the need for an additional separate reference device.

It is important to note that, in the description as well as in the claims, the word "comprising" does not exclude other elements or steps and the indefinite article "a" or "an" does not exclude a plurality. A single element or other unit may fulfill the functions of several entities or items recited in the claims.

It should be understood that the term "and/or" used in the specification and the appended claims of this application refers to any combination and all possible combinations of one or more associated listed items, and includes these combinations. Moreover, the disclosure with regard to any of the aspects is also relevant with regard to the other aspects of the disclosure.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

**Claims**

1. A system (100) for phase-based positioning comprising:

    at least one target device (101) configured to transmit a first signal fragment (102),
    at least one transceiver device (103) configured to receive the first signal fragment (102) from the target device (101), to measure a phase of the first signal fragment (102), and to transmit a second signal fragment (104) with a phase having a known phase relationship with the measured phase of the first signal fragment (102),
    at least one receiver device (105) configured to receive the first signal fragment (102) from the target device (101), to measure the phase of the first signal fragment (102), to receive the second signal fragment (104) from the transceiver device (103), and to measure the phase of the second signal fragment (104), and
    at least one processing unit (107) configured to calculate a phase difference between the phase of the first signal fragment (102) and the phase of the second signal fragment (104) as measured by the receiver device (105) to estimate position information of the target device (101).

2. The system according to claim 1,
    wherein the processing unit (107) is configured to estimate the position information of the target device (101) based on the calculated phase difference between the phase of the first signal fragment (102) and the phase of the second signal fragment (104) as measured by the receiver device (105) and the known phase relationship between the phase of the second signal fragment (104) and the measured phase of the first signal fragment (102).

3. The system according to claim 1 or 2,
wherein the position information of the transceiver device (103) and the position information of the receiver device (105) are known, especially to the processing unit (107).

4. The system according to any of claims 1 to 3,
wherein the first signal fragment (102) transmitted by the target device (101) comprises an arbitrary phase, and/or wherein the phase of the first signal fragment (102) as measured by the transceiver device (103) is arbitrary.

5. The system according to any of claims 1 to 4,

wherein the transceiver device (103) is configured to transmit the known phase relationship between the phase of the second signal fragment (104) and the measured phase of the first signal fragment (102) to the processing unit (107), or
wherein the known phase relationship between the phase of the second signal fragment (104) and the measured phase of the first signal fragment (102) is known a priori to the processing unit (107).

6. The system according to any of claims 1 to 5,

wherein the transceiver device (103) is configured to transmit the second signal fragment (104) at a different time with respect to a transmission time of the first signal fragment (102) transmitted by the target device (101), and/or
wherein the transceiver device (103) is configured to transmit the second signal fragment (104) with a modulation scheme different from a modulation scheme of the first signal fragment (102) transmitted by the target device (101) .

7. The system according to any of claims 1 to 6,

wherein the receiver device (105) comprises the processing unit (107), and/or
wherein the transceiver device (103) and the receiver device (105) are access point devices, especially a wireless access point device, and/or
wherein the transceiver device (103) is a mobile device, especially a wireless mobile device, and/or
wherein the target device (101) is a mobile device, especially a wireless mobile device.

8. A system (300) for phase-based positioning comprising:

at least one transmitter device (301) configured to transmit a first signal fragment (302),
at least one transceiver device (303) configured to receive the first signal fragment (302) from the transmitter device (301), to measure a phase of the first signal fragment (302), and to transmit a second signal fragment (304) with a phase having a known phase relationship with the measured phase of the first signal fragment (302),
at least one target device (305) configured to receive the first signal fragment (302) from the transmitter device (301), to measure the phase of the first signal fragment (302), to receive the second signal fragment (304) from the transceiver device (303), and to measure the phase of the second signal fragment (304), and
at least one processing unit (307) configured to calculate a phase difference between the phase of the first signal fragment (302) and the phase of the second signal fragment (304) as measured by the target device (305) to estimate position information of the target device (305).

9. The system according to claim 8,
wherein the processing unit (307) is configured to estimate the position information of the target device (305) based on the calculated phase difference between the phase of the first signal fragment (302) and the phase of the second signal fragment (304) as measured by the target device (305) and the known phase relationship between the phase of the second signal fragment (304) and the measured phase of the first signal fragment (302).

10. The system according to claim 8 or 9,
wherein the position information of the transmitter device (301) and the position information of the transceiver device (303) are known, especially to the processing unit (307).

11. The system according to any of claims 8 to 10,

wherein the first signal fragment (302) transmitted by the transmitter device (301) comprises an arbitrary phase, and/or
wherein the phase of the first signal fragment (302) as measured by the transceiver device (303) is arbitrary.

12. The system according to any of claims 8 to 11,

wherein the transceiver device (303) is configured to transmit the known phase relationship between the phase of the second signal fragment (304) and the measured phase of the first signal fragment (302) to the processing unit (307), or
wherein the known phase relationship between the phase of the second signal fragment (304) and the measured phase of the first signal fragment (302) is known a priori to the processing unit (307), and/or
wherein the target device (305) comprises the processing unit (307).

13. The system according to any of claims 8 to 12,

wherein the transceiver device (303) is configured to transmit the second signal fragment (304) at a different time with respect to a transmission time of the first signal fragment (302) transmitted by the transmitter device (301), and/or
wherein the transceiver device (303) is configured to transmit the second signal fragment (304) with a modulation scheme different from a modulation scheme of the first signal fragment (302) transmitted by the transmitter device (301).

14. A method (500) for phase-based positioning comprising:

transmitting (501), by at least one target device, a first signal fragment,
receiving (502), by at least one transceiver device, the first signal fragment from the target device,
measuring (503), by the transceiver device, a phase of the first signal fragment,
transmitting (504), by the transceiver device, a second signal fragment with a phase having a known phase relationship with the measured phase of the first signal fragment,
receiving (505), by at least one receiver device, the first signal fragment from the target device,
measuring (506), by the receiver device, the phase of the first signal fragment,
receiving (507), by the receiver device, the second signal fragment from the transceiver device,
measuring (508), by the receiver device, the phase of the second signal fragment,
calculating (509), by at least one processing unit, a phase difference between the phase of the first signal fragment and the phase of the second signal fragment as measured by the receiver device, and
estimating (510), by the processing unit, position information of the target device based on the calculated phase difference.

15. A method (600) for phase-based positioning comprising:

transmitting (601), by at least one transmitter device, a first signal fragment,
receiving (602), by at least one transceiver device, the first signal fragment from the transmitter device,
measuring (603), by the transceiver device, a phase of the first signal fragment,
transmitting (604), by the transceiver device, a second signal fragment with a phase having a known phase relationship with the measured phase of the first signal fragment,
receiving (605), by at least one target device, the first signal fragment from the transmitter device,
measuring (606), by the target device, the phase of the first signal fragment,
receiving (607), by the target device, the second signal fragment from the transceiver device,
measuring (608), by the target device, the phase of the second signal fragment,
calculating (609), by at least one processing unit, a phase difference between the phase of the first signal fragment and the phase of the second signal fragment as measured by the target device, and
estimating (610), by the processing unit, position information of the target device based on the calculated phase difference.

100

Fig. 1

Fig. 2A

Fig. 2B

300

TX
301

302

302

TRX
303

304

306

TD
305

PROC
307

Fig. 3

Fig. 4

500

transmitting, by at least one target device, a first signal fragment — 501

receiving, by at least one transceiver device, the first signal fragment from the target device — 502

measuring, by the transceiver device, a phase of the first signal fragment — 503

transmitting, by the transceiver device, a second signal fragment with a phase having a known phase relationship with the measured phase of the first signal fragment — 504

receiving, by at least one receiver device, the first signal fragment from the target device — 505

measuring, by the receiver device, the phase of the first signal fragment — 506

receiving, by the receiver device, the second signal fragment from the transceiver device — 507

measuring, by the receiver device, the phase of the second signal fragment — 508

calculating, by at least one processing unit, a phase difference between the phase of the first signal fragment and the phase of the second signal fragment measured by the receiver device — 509

estimating, by the processing unit, position information of the target device based on the calculated phase difference — 510

## Fig. 5

600

transmitting, by at least one transmitter device, a first signal fragment — 601

receiving, by at least one transceiver device, the first signal
fragment from the transmitter device — 602

measuring, by the transceiver device, a phase of
the first signal fragment — 603

transmitting, by the transceiver device, a second signal fragment
with a phase having a known phase relationship with the
measured phase of the first signal fragment — 604

receiving, by at least one target device, the first signal
fragment from the transmitter device — 605

measuring, by the target device, the phase of
the first signal fragment — 606

receiving, by the target device, the second signal
fragment from the transceiver device — 607

measuring, by the target device, the phase of
the second signal fragment — 608

calculating, by at least one processing unit, a phase difference
between the phase of the first signal fragment and the phase of the
second signal fragment measured by the target device — 609

estimating, by the processing unit, position information of the
target device based on the calculated phase difference — 610

## Fig. 6

Europäisches
Patentamt

European
Patent Office

Office européen
des brevets

# EUROPEAN SEARCH REPORT

**Application Number**

EP 24 18 4160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/098229 A1 (GURELLI MEHMET IZZET [US] ET AL) 30 March 2023 (2023-03-30) * fig. 8-11; par. 103-154 * ----- | 1-15 | INV. G01S5/02 |
| X | CN 113 543 306 A (BOSCH GMBH ROBERT) 22 October 2021 (2021-10-22) * fig. 2, 3 * ----- | 1-15 | |
| X | US 2024/019524 A1 (DUAN WEIMIN [US] ET AL) 18 January 2024 (2024-01-18) * fig. 8, 9; par. 53-87 * ----- | 1-15 | |

TECHNICAL FIELDS
SEARCHED (IPC)

G01S

The present search report has been drawn up for all claims

| Place of search | Date of completion of the search | Examiner |
|---|---|---|
| Munich | 11 December 2024 | González Moreno, J |

EPO FORM 1503 03.82 (P04C01)

## ANNEX TO THE EUROPEAN SEARCH REPORT
## ON EUROPEAN PATENT APPLICATION NO.

EP 24 18 4160

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | | Publication date | Patent family member(s) | | Publication date |
|---|---|---|---|---|---|
| US 2023098229 | A1 | 30-03-2023 | NONE | | |
| CN 113543306 | A | 22-10-2021 | CN | 113543306 A | 22-10-2021 |
| | | | DE | 102020204819 A1 | 21-10-2021 |
| | | | EP | 3896477 A1 | 20-10-2021 |
| | | | US | 2021329411 A1 | 21-10-2021 |
| US 2024019524 | A1 | 18-01-2024 | CN | 116897298 A | 17-10-2023 |
| | | | EP | 4302121 A1 | 10-01-2024 |
| | | | KR | 20230154816 A | 09-11-2023 |
| | | | US | 2024019524 A1 | 18-01-2024 |
| | | | WO | 2022187773 A1 | 09-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4273572 A1